# EUROPÄISCHE PATENTSCHRIFT

(11) **EP 0 693 392 B1**
(45) Veröffentlichungstag und Bekanntmachung des Hinweises auf die Patenterteilung: **18.03.1998**
(21) Anmeldenummer: 95110608.7
(22) Anmeldetag: 07.07.1995
(51) Int. Cl.: B60L 11/08, B60K 17/28

(54) **Landwirtschaftlicher Traktor mit elektromechanischem Getriebe**
Agricultural tractor with electromechanical transmission
Tracteur agricole avec transmission électromécanique

(30) Priorität: 19.07.1994 DE 4425387
(43) Veröffentlichungstag der Anmeldung: 24.01.1996
(73) Patentinhaber: Schmetz, Roland, Dr.-Ing. Dipl.-Wirth.-Ing., 47533 Kleve (DE)
(72) Erfinder: Schmetz, Roland, Dr.-Ing. Dipl.-Wirth.-Ing., 47533 Kleve (DE)
(74) Vertreter: Cohausz & Florack

(56) Entgegenhaltungen:
- EP-A- 0 510 582
- WO-A-93/17889
- DE-A- 2 824 229
- US-A- 4 309 620

## Beschreibung

Die Erfindung betrifft einen landwirtschaftlichen Traktor, dessen Verbrennungsmotor über ein, insbesondere ein Differentialgetriebe aufweisendes Endgetriebe mit dem Fahrantrieb verbunden ist. Ein Traktor dieser Art ist aus der Praxis bekannt. Bei einem solchen Traktor arbeitet der Verbrennungsmotor bekanntermaßen auf ein Getriebe, welches über eine Reibungs- oder Fluidkupplung angekoppelt ist. Ein solches Getriebe kann aus den Komponenten Wende-/Lastschalt- und Gruppengetriebe bestehen. Dieses Getriebe arbeitet auf ein Endgetriebe für den Traktionsantrieb. Die Anforderungen an Getriebe für diesen Einsatzzweck sind erheblich. So sind Getriebe mit bis zu 100 Vorwärts- und Rückwärtsgängen nicht selten. Eine besondere Anforderung an dieses Getriebe ist häufig auch, daß es mindestens teil- am besten aber vollastschaltbar sein muß. Getriebe, die diese Voraussetzungen erfüllen, sind hochkompliziert aufgebaut und weisen nicht selten Wirkungsgrade von weniger als 90 %, vor allem im Teillastbetrieb, auf. Dies gilt insbesondere für lastschaltbare Getriebe bei Verwendung von hydrostatischen oder hydrodynamischen Kupplungen. Neben dem Nachteil eines erhöhten Kraftstoffverbrauches aufgrund des herabgesetzten Wirkungsgrades besteht auch ein zusätzlicher Aufwand darin, die Wartung bzw. Instandhaltung der stark erhöhten Anzahl von Getriebeteilen anpassen zu müssen.

Ein weiterer Nachteil ist in dem Auftreten von Schaltstößen zu sehen.

Aus der DE-A-2805932 ist ein landwirtschaftlicher Traktor bekannt, welcher als Verbrennungsmotor eine hochtourig mit konstanter Geschwindigkeit laufende Gasturbine aufweist. An diese ist mechanisch ein Wechselstromgenerator angeschlossen, dessen Ausgangsstrom über Umrichter auf Motoren übertragen wird, die mechanisch an die Traktorräder gekoppelt sind. Somit wird die Leistung, die zum Antrieb der Traktorräder benötigt wird, über elektrische Leiter zu den einzelnen Radmotoren übertragen. Dieser Traktor weist insoweit bereits ein anderes Konzept auf, als hierbei ein Endgetriebe für die Verteilung des Drehmomentes auf den Traktionsantrieb nicht vorgesehen ist. Diese elektrischen Kraftübertragungen sind aber praktisch bei landwirtschaftlichen Traktoren nicht anwendbar, da mit diesen Antrieben die an den langsam drehenden Antriebsrädern der Traktoren notwendigen hohen Antriebsmomente bei gegebenen Baugrößenverhältnissen nicht erzeugt werden können.

Aus dem Dokument US-A-4 309 620 ist ein Fahrzeug gemäß dem obigen Teil des Anspruchs 1 bekannt.

Der Erfindung liegt die Aufgabe zugrunde, einen landwirtschaftlichen Traktor dahingehend weiterzuentwickeln, daß sein Aufbau und seine Wartung bzw. Instandhaltung vereinfacht und seine Bedienungsfreundlichkeit und sein Wirkungsgrad verbessert werden können.

Diese Aufgabe wird erfindungsgemäß durch den Traktor gemäß Anspruch 1 gelöst

Die Erfindung zeichnet sich wesentlich dadurch aus, daß das bislang rein mechanisch ausgeführte Getriebe durch ein elektromechanisches Getriebe ersetzt wird, wodurch eine stufenlose Kraftübertragung bei optimaler Ausnutzung der Antriebsleistung ermöglicht wird. Der Wirkungsgrad dieser Lösung ist im Vergleich zu hydrostatisch leistungsverzweigten Lastschaltgetrieben deutlich verbessert. Die Lagerhaltung für die zahlreichen Bauteile des hochkomplizierten Schaltgetriebes entfällt. Im übrigen vereinfacht sich die Wartung, da die Komponenten des elektromechanischen Getriebes praktisch wartungsfrei sind. Die Bedienbarkeit wird verbessert, weil bislang der Bedienungsperson zukommende Regelaufgaben nunmehr von der elektronischen Regelung übernommen werden können.

Gemäß der erfindungsgemäßen Lösung wird der im Generator erzeugte Strom über die Regeleinheit dem Elektromotor zugeführt, welcher direkt das (konventionelle) Endgetriebe des Traktionsantriebes versorgt. Aufgrund der hohen Flexibilität der elektronischen Regelung ist es möglich, sowohl die Anforderung für schnelle Gänge, beispielsweise für Transportfahrten des Traktors als auch für extrem langsame Gänge (Kriechgänge) bei bestimmten Bestell- oder Erntearbeiten zu erfüllen. Auch eine Anwendung auf selbstfahrende landwirtschaftliche Maschinen, beispielsweise Erntemaschinen, ist möglich. Da die Charakteristik des Elektromotors für den Fahrantrieb (Traktionsantrieb) durch die Regeleinheit in weiten Bereichen veränderbar ist, ist für den Verbrennungsmotor keine besondere Motorcharakteristik erforderlich, so daß dieser hinsichtlich seiner Regelbarkeit vereinfacht werden kann.

Eine erste besondere Ausführungsform der erfindungsgemäßen Lösung betrifft solche Traktoren, bei denen der Verbrennungsmotor über ein weiteres Getriebe mit einer Motorzapfwelle verbindbar ist, also ein elektromechanischer Fahrantrieb mit einem mechanischen Zapfwellenantrieb kombiniert ist (Hybridantrieb). Sie sieht vor, daß die Ankerwelle des Elektromotors eine Hohlwelle ist, innerhalb der eine weitere Antriebswelle angeordnet ist, mittels der die Kurbelwelle des Verbrennungsmotors mit dem weiteren Getriebe für die Motorzapfwelle verbindbar ist. Hierdurch ergibt sich eine vorteilhafte Überlagerung von Antrieb für den Fahrantrieb des Traktors einerseits und für die Motorzapfwelle andererseits. Beide Antriebsteile können in einer einzigen Einheit integriert sein, wobei die Charakteristik des Verbrennungsmotors nur noch durch die Anforderungen aufgrund der Motorzapfwelle bestimmt sein muß, jedoch im übrigen aufgrund der frei programmierbaren elektronischen Regelung keiner Beschränkung unterworfen ist.

Eine zweite besondere Ausführungsform der erfindungsgemäßen Lösung auf solche Traktoren, bei denen der Verbrennungsmotor über ein weiteres Getriebe mit einer Motorzapfwelle verbindbar ist, sieht vor, daß der Elektromotor so eingebaut ist, daß seine Ankerwelle parallel und/oder konzentrisch zu den angetriebenen Achsen des Traktors liegt. Der Zapfwellenantrieb ist dabei an dem Elektromotor vorbeigeführt.

Eine dritte Ausführungsform der erfindungsgemäßen Lösung, die mit den jeweiligen Merkmalen der beiden vorgenannten Lösungen kombiniert werden kann, sieht vor, daß der Generator anstatt zwischen Verbrennungs- und Elektromotor vor dem Verbrennungsmotor angeordnet und mit diesem drehstarr verbunden ist.

Weitere bevorzugte Ausführungsformen gehen aus den nachfolgenden Unteransprüchen hervor.

Die Erfindung wird im folgenden anhand einer Zeichnung näher erläutert.

Dabei zeigen:
- Fig.1: einen Längsschnitt durch einen aus dem Stand der Technik bekannten Traktor,
- Fig.2: einen Längsschnitt eines ersten Ausführungsbeispiels der vorliegenden Erfindung,
- Fig.3: ein Blockschaltbild eines zweiten Ausführungsbeispiels der vorliegenden Erfindung,
- Fig. 4: ein Blockschaltbild eines dritten Ausführungsbeispiels der vorliegenden Erfindung,
- Fig. 5: ein Blockschaltbild hinsichtlich des elektromechanischen Getriebes gemäß den Ausführungsbeispielen aus den Fig. 2,3 und 4.

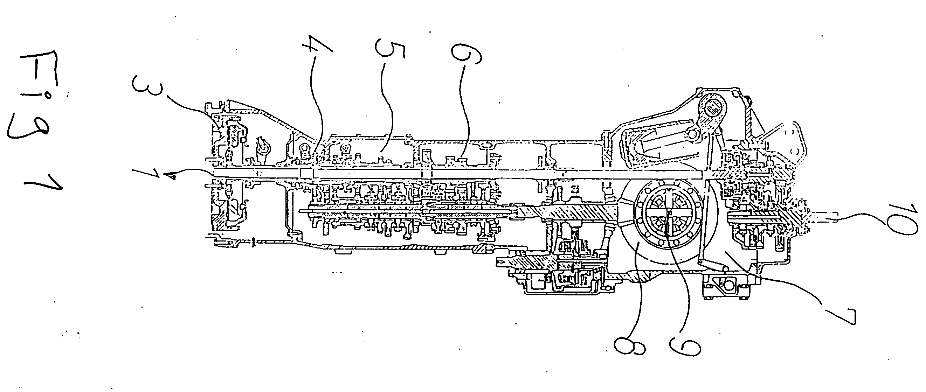

Figur 1 zeigt einen Längsschnitt durch einen aus dem Stand der Technik bekannten landwirtschaftlichen Traktor. Die vom Verbrennungsmotor 1 erzeugte Antriebsleistung wird über eine zentrale Welle zunächst auf eine Reibungskupplung 3 übertragen. Nachgeschaltet ist ein Wendegetriebe 4 sowie ein Lastschaltgetriebe 5 und ein Gruppengetriebe 6. Das vom Gruppengetriebe 6 abgegebene Drehmoment wird auf ein Endgetriebe 7 übertragen. Hierbei handelt es sich um ein konventionelles Endgetriebe mit einem Kegelrad- und einem Differentialgetriebe 8, welches mit dem Traktionsantrieb 9, z.B. in Form eines Rad- oder Gleiskettenantriebes gekoppelt ist.

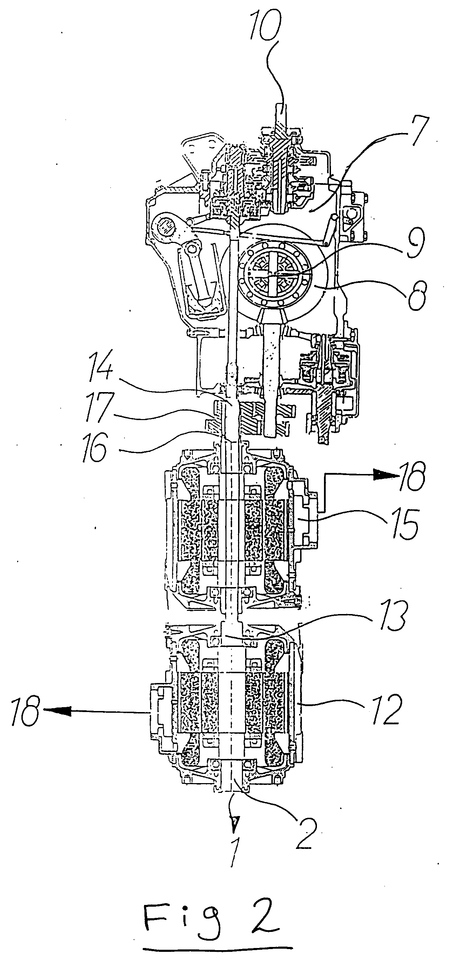

Figur 2 zeigt einen Längsschnitt durch ein erstes Ausführungsbeispiel eines erfindungsgemäßen landwirtschaftlichen Traktors, wobei gemeinsame Bauteile mit gleichen Bezugszeichen versehen sind.

Der landwirtschaftliche Traktor nach Fig. 2 weist als Verbrennungsmotor einen (nicht gezeigten) Dieselmotor auf, der über eine drehsteife Kupplung mit (nicht gezeigte) Torsionsdämpfung einen Drehstromgenerator 12 antreibt. Die Nenndrehzahl und Nennleistung von Dieselmotor und Generator 12 sind aufeinander abgestimmt.

Die Ankerwelle 13 des Generators 12 ist mit einer Welle 14 gekoppelt, die das Untersetzungsgetriebe für die Zapfwelle 10 am Heck des Traktors antreibt. Die Welle 14 ist konzentrisch innerhalb einer als Hohlwelle ausgeführten Ankerwelle 16 eines dem Generator 12 nachgeordneten Elektromotors 15 angeordnet.

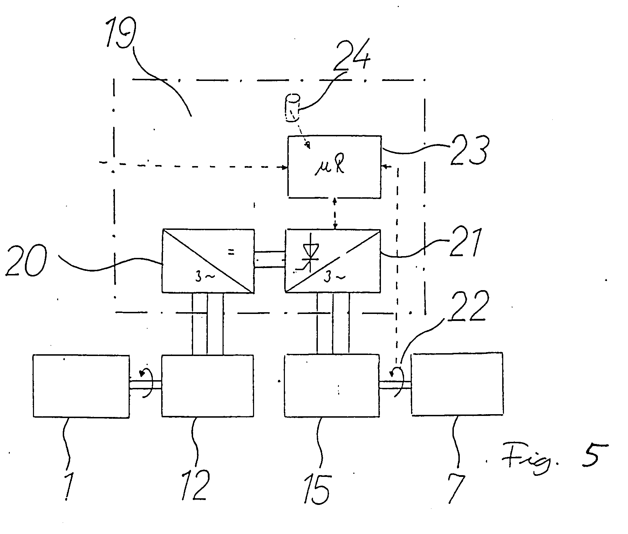

Der im Generator 12 erzeugte Drehstrom wird einer Steuerungs- und Regeleinheit 19 zugeführt, die in Fig. 5 im Detail dargestellt ist. Der mittels des Reglers umgerichtete Strom wird dem als kollektorlosen Drehstromasynchronmotor ausgeführten Motor 15 zugeführt. Die Auslegung des Motors ist derart, daß er bis zu seiner Nenndrehzahl mit seinem Kippmoment und darüber hinaus bei konstanter Leistung im Feldschwächungsbereich bis zu etwa dem 4-fachen seiner Nenndrehzahl betrieben werden kann.

Die volle Reversierbarkeit des Antriebs ist durch die Umkehrbarkeit des Stromdrehsinnes gegeben.

Die Ankerwelle 16 des Motors ist über ein mechanisches zweistufiges Fahrstufengetriebe 17 (Transportgänge/langsame Gänge) mit dem konventionellen Endgetriebe 7 des landwirtschaftlichen Traktors verbunden. Die Kühlung 18 der Generator-/Elektromotoreinheit erfolgt entweder mittels Luftkühlung, über einen separaten Flüssigkeitskühler oder über einen am Traktor vorhandenen Kühlkreislauf (Motorkühlkreislauf, Getriebeölkühlkreislauf oder Kühlkreislauf der Klimaanlage).

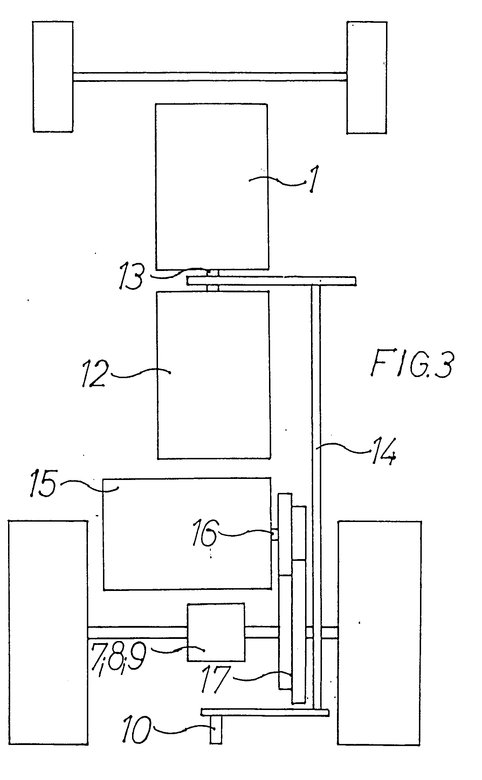

Fig. 3 zeigt ein Blockschaltbild eines zweiten Ausführungsbeispiels eines erfindungsgemäßen landwirtschaftlichen Traktors, wobei gemeinsame Bauteile mit gleichen Bezugszeichen versehen sind. Er weist als Verbrennungsmotor einen Dieselmotor 1 auf, der über eine drehsteife Kupplung mit (nicht gezeigte) Torsionsdämpfung einen Drehstromgenerator 12 antreibt. Der in dem Generator 12 erzeugte Strom wird einer Steuerungs- und Regeleinheit 19 zugeführt, die in Fig. 5 im Detail dargestellt ist und die gleiche ist wie bei dem Traktor nach der Fig. 2. Die Ankerwelle 13 des Generators 12 ist mit einer Welle 14 gekoppelt, die das Untersetzungsgetriebe für die Zapfwelle 10 am Heck des Traktors antreibt. Die Welle 14 ist dabei an dem parallel zur Hinterachse des Traktors eingebauten Elektromotors 15 vorbeigeführt. Die Ankerwelle 16 des Motors ist über ein mechanisches zweistufiges Fahrgetriebe 17 (Transportgänge/ langsame Gänge) mit der Hinterachse des landwirtschaftlichen Traktors verbunden. Die Kühlung der Generator-/Elektromotoreinheit erfolgt in gleicher Weise wie bei dem Traktor nach Fig. 2.

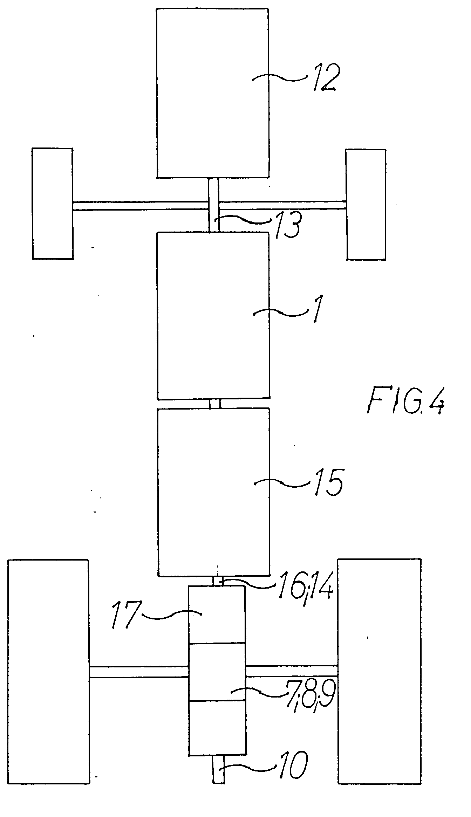

Fig. 4 zeigt ein Blockschaltbild eines dritten Ausführungsbeispiels eines erfindungsgemäßen landwirtschaftlichen Traktors, wobei gemeinsame Bauteile mit gleichen Bezugszeichen versehen sind. Er weist als Verbrennungsmotor einen mittig angeordneten Dieselmotor 1 auf, der über einen ersten Antrieb und eine drehsteife Kupplung mit (nicht gezeigte) Torsionsdämpfung einen Drehstromgenerator 12 antreibt. Der in dem Generator 12 erzeugte Strom wird einer Steuerungs- und Regeleinheit 19 zugeführt, die in Fig. 5 im Detail dargestellt ist und die gleiche ist wie bei dem Traktor nach der Fig. 2. Ein zweiter Antrieb des Dieselmotors 1 ist mit einer Welle 14 gekoppelt, die das Untersetzungsgetriebe für die Zapfwelle 10 am Heck des Traktors antreibt. Die Welle 14 ist konzentrisch innerhalb einer als Hohlwelle ausgeführten Ankerwelle 16 eines dem Dieselmotor 1 nachgeordneten Elektromotors 15 angeordnet. Die Ankerwelle 16 des Motors ist über ein mechanisches zweistufiges Fahrgetriebe 17 (Transportgänge/ langsame Gänge) mit dem konventionellen Endgetriebe 7 des landwirtschaftlichen Traktors verbunden. Die Kühlung 18 der Generator-/Elektromotoreinheit erfolgt in gleicher Weise wie bei dem Traktor nach Fig. 2.

Die in Figur 5 dargestellte Steuerungs- und Regeleinheit 19 arbeitet nach dem Prinzip der feldorientierten Regelung mit Rotorlagerückführung. Der in dem Generator erzeugte Strom wird einer Steuerungs- und Regeleinheit 19 zugeführt. In dieser Einheit wird der Strom zunächst gleichgerichtet 20 und dann mit Hilfe von Leistungshalbleitern 21 in ein von einem feldorientierten Regler mit Rotorlagerückführung berechnetes, eingeprägtes Stromsystem umgewandelt, so daß bei dem angeschlossenen Elektromotor die Parameter Drehzahl, Drehsinn und Drehmoment einstellbar sind. Diese Parameter werden dabei durch zusätzliche Steuerungs- und Regelkreise in Abhängigkeit der vom Fahrer vorgegebenen Betriebspunkte oder Befehle und der aktuellen Betriebsbedingungen ermittelt und dem feldorientierten Regler als Sollwerte vorgegeben. Die dazu erforderlichen Meßgrößen werden mittels Sensoren 22 an den entsprechenden Baugruppen des Traktors abgegriffen und in der Steuerungs- und Regelungseinheit mit Hilfe von Mikroprozessoren 23 und spezieller Steuerungs- und Regelungssoftware 24 zu den benötigten Sollwerten verarbeitet, aus denen der feldorientierte Regler die entsprechenden Stellgrößen berechnet.

Die vorstehend beschriebenen Ausführungsformen des erfindungsgemäßen Traktors bilden die Grundlage für zahlreiche vorteilhafte Weiterentwicklungen. Weil die Charakteristik des Elektromotors für den Fahrantrieb durch die Steuerungs- und Regeleinheit in weiten Bereichen verändert werden kann, braucht die Charakteristik des Verbrennungsmotors nur noch auf die Anforderungen für die Nutzung der Motorzapfwelle abgestimmt werden. Für den Antrieb des Generators ist keine besondere Motorcharakteristik erforderlich. Die Steuerungs- und Regeleinheit kann außer für die Generator-/ Elektromotoreinheit auch für Steuerungs- und Regelungsfunktionen für den Verbrennungsmotor, den Kraftheber und die Motorzapfwelle genutzt werden, so daß ein zentrales Mangementsystem für den Traktor entsteht. Der Elektromotor und/oder der Generator können mit Supraleitenden Elementen ausgestattet sein und die Leistungsbauteile des Reglers können Supraleitende Elemente aufweisen.

Der erfindungsgemäße landwirtschaftliche Traktor weist u.a. folgende Steuerungs- und Regelfunktionen auf:
- stufenlose Einstellung eines konstanten Untersetzungsverhältnisses bei variabler Motordrehzahl, z.B. für wegabhängige Zapfwellenarbeiten (ähnlich dem Einlegen eines bestimmten Ganges bei einem Schaltgetriebe); in Verbindung mit einer Schlupfregelung über Bodenradar kann dann auf die mechanische wegabhängige Schaltung der Zapfwelle verzichtet werden,
- Einstellung einer konstanten Fahrgeschwindigkeit in Verbindung mit variabler Zapfwellendrehzahl, z.B. für den Betrieb mit Großpackenpressen bei veränderlichen Schwadstärken,
- automatische Einstellung des Untersetzungsverhältnisses in Abhängigkeit der eingestellten Leistung des Verbrennungsmotors und des zu überwindenden Fahrwiderstandes, z. B. für Transportfahrten oder beim Pflügen (ähnlich einer stufenlosen, mechanischen Kraftübertragung mit Geschwindigkeitseinstellung über die Gasregulierung des Antriebsmotors),
- Einstellung der Motorleistung im jeweiligen Betriebsoptimum, vor allem in Verbindung mit der letztgenannten Einstellungsmöglichkeit (maximale Leistung, minimaler spezifischer Kraftstoffbedarf etc.) und
- Einstellung eines beliebigen Geschwindigkeitsverhältnisses zwischen Vorwärts- und Rückwärtsfahrt, z.B. bei Rangier- und Frontladerarbeiten.

## Patentansprüche

1. Fahrzeug, dessen Verbrennungsmotor (1) vorzugsweise drehstarr mit der Ankerwelle (13) eines Generators (12) verbunden ist, welcher Generator (12) einen Elektromotor (15) speist, dessen Ankerwelle (16) über ein vorzugsweise ein Differentialgetriebe (8) aufweisendes Endgetriebe (7) mit dem Fahrantrieb (9) verbunden ist, wobei die Generator/Elektromotoreinheit (12,15) einen elektronischen Regler (19) aufweist,
dadurch gekennzeichnet, daß das Fahrzeug ein landwirtschaftlicher Traktor ist, daß ein Istwert für den Regler (19) von einem Rotorlagegeber an der Ankerwelle (16) des Elektromotors (15) detektiert wird und daß Sollwerte für Drehzahl, Drehmoment und Drehrichtung für den Regler von der Bedienungsperson frei vorgebbar sind.

2. Landwirtschaftlicher Traktor nach Anspruch 1, wobei der Verbrennungsmotor (1) über ein weiteres Getriebe, insbesondere ein Untersetzungsgetriebe, mit einer Motorzapfwelle (10) verbindbar ist, und wobei die Ankerwelle (16) des Elektromotors (15) eine Hohlwelle ist, innerhalb der eine weitere Antriebswelle (14) angeordnet ist, mittels der die Ankerwelle (13) des Generators (12) mit dem weiteren Getriebe für die Motorzapfwelle (10) verbindbar ist.

3. Landwirtschaftlicher Traktor nach Anspruch 1, wobei der Verbrennungsmotor (1) über ein weiteres Getriebe, insbesondere ein Untersetzungsgetriebe, mit einer Motorzapfwelle (10) verbindbar ist, und wobei
der Elektromotor (15) so eingebaut ist, daß seine Ankerwelle parallel und/oder konzentrisch zu den angetriebenen Achsen des Traktors liegt, wobei der Zapfwellenantrieb dabei an dem Elektromotor vorbeigeführt ist.

4. Landwirtschaftlicher Traktor nach Anspruch 1, wobei der Verbrennungsmotor (1) über ein weiteres Getriebe, insbesondere ein Untersetzungsgetriebe, mit einer Motorzapfwelle (10) verbindbar ist und wobei
der Verbrennungsmotor (1) zwischen, vorzugsweise mittig zwischen dem Generator (12) und dem Elektromotor (15) eingebaut ist und über zwei Abtriebe verfügt, von denen der eine drehstarr mit dem Generator und der andere mit einer Antriebswelle (14) verbunden ist, die das Getriebe für die Motorzapfwelle (10) antreibt.

5. Landwirtschaftlicher Traktor nach einem der vorhergehenden Ansprüche, wobei
die Ankerwelle (16) des Elektromotors (15) der Generator/Motoreinheit (12,15) über ein mechanisches Fahrstufengetriebe (17) mit dem Endgetriebe (7) gekoppelt ist.

6. Landwirtschaftlicher Traktor nach einem der vorhergehenden Ansprüche, wobei
der Verbrennungsmotor (1) über eine drehsteife Kupplung mit Torsionsdämpfung mit dem Generator (12) verbunden ist.

7. Landwirtschaftlicher Traktor nach einem der vorhergehenden Ansprüche, wobei
der Generator (12) und der als Dieselmotor ausgeführte Verbrennungsmotor (1) hinsichtlich Nenndrehzahl und Nennleistung aufeinander abgestimmt sind.

8. Landwirtschaftlicher Traktor nach einem der vorhergehenden Ansprüche, wobei
der Elektromotor ein Drehstromasynchronmotor mit Käfigläufer ist.

9. Landwirtschaftlicher Traktor nach einem der vorhergehenden Ansprüche, wobei
der Regler (19) zusätzlich mit dem Verbrennungsmotor (1), insbesondere seiner Kraftstoffzuführung, und/oder der Motorzapfwelle (10) und/oder dem Kraftheber des Traktors verbindbar ist.

10. Landwirtschaftlicher Traktor nach einem der vorhergehenden Ansprüche, wobei
der Regler (19) einen Gleichrichter (20), einen dreiphasigen Stromrichter (21) und einen den dreiphasigen Stromrichter steuernden Mikrorechner (23) aufweist, welcher sein Eingangssignal vom Istwertgeber für die Rotorlage (22) erhält.

11. Landwirtschaftlicher Traktor nach einem der vorhergehenden Ansprüche, wobei
die Kühlung (18) der Generator/Motoreinheit (12,15) eine Luftkühlung oder eine Flüssigkeitskühlung, insbesondere Ölkühlung oder Wasserkühlung, ist.

12. Landwirtschaftlicher Traktor nach einem der vorhergehenden Ansprüche, wobei
der Regler (19) ein feldorientierter elektronischer Regler ist.

13. Landwirtschaftlicher Traktor nach einem der vorhergehenden Ansprüche, wobei
der Elektromotor (15) und/oder der Generator (12) mit supraleitenden Elementen ausgestattet ist/sind.

14. Landwirtschaftlicher Traktor nach einem der vorhergehenden Ansprüche, wobei
die Leistungsbauteile des Reglers supraleitende Elemente aufweisen.

## Claims

1. A vehicle whose combustion engine (1) is preferably connected in a torsionally-rigid way to the rotor shaft (13) of a generator (12), which generator (12) feeds an electric motor (15), the rotor shaft (16) of which is connected to the traction drive (9) by a final transmission (7), preferably comprising a differential transmission (8), in which the generator / electric motor unit (12, 15) comprises an electronic controller (19), characterised in that the vehicle is an agricultural tractor, that an actual value for the controller (19) is detected by a rotor position sensor at the rotor shaft (16) of the electric motor (15) and that setting values for rotational speed, torque and direction of rotation for the controller can be freely preset by the operator.

2. An agricultural tractor according to claim 1, wherein the combustion engine (1) is connectable by way of a further transmission, in particular a reduction unit, with a live power-takeoff (10) and wherein the rotor shaft (16) of the electric motor (15) is a hollow shaft inside of which a further drive shaft (14) is arranged by means of which the rotor shaft (13) of the generator (12) is connectable to the further transmission for the live power-takeoff (10).

3. An agricultural tractor according to claim 1, in which the combustion engine (1) is connectable to a live power-takeoff (10), by way of a further transmission, in particular a reduction unit, and in which the electric motor (15) is installed in such a way that its rotor shaft is aligned parallel and/or concentrically to the driven axles of the tractor, with the power takeoff leading past the electric motor.

4. An agricultural tractor according to claim 1, in which the combustion engine (1) is connectable to a live power-takeoff (10) by way of a further transmission, in particular a reduction unit, and in which the combustion engine (1) is installed between, preferably in the middle between, the generator (12) and the electric motor (15) and comprises two driven gears, one of which is connected to the generator in a torsionally-rigid way, and the other is connected with a drive shaft (14) which drives the transmission for the live power-takeoff (10).

5. An agricultural tractor according to one of the preceding claims, in which the rotor shaft (16) of the electric motor (15) of the generator/motor unit (12, 15) is coupled to the final transmission (7) by way of a mechanical gear ratio transmission (17).

6. An agricultural tractor according to one of the preceding claims in which the combustion engine (1) is connected to the generator (12) by way of a torsionally-rigid clutch with torque cushion.

7. An agricultural tractor according to one of the preceding claims, in which the generator (12) and the combustion engine (1) which is a diesel engine, are matched to each other regarding nominal rotational speed and nominal power.

8. An agricultural tractor according to one of the preceding claims, in which the electric motor is a three-phase asynchronous motor with squirrel-cage rotor.

9. An agricultural tractor according to one of the preceding claims, in which the controller (19) is additionally connectable to the combustion engine (1), in particular to its fuel supply and/or the live power-takeoff (10) and/or the power lift of the tractor.

10. An agricultural tractor according to one of the preceding claims, in which the controller (19) comprises a rectifier (20), a three-phase power converter (21) and a microprocessor (23) controlling the three-phase power converter; with the said microprocessor receiving its input signal from the actual-value transmitter for the rotor position (22).

11. An agricultural tractor according to one of the preceding claims, in which the cooling system (18) for the generator/motor unit (12, 15) is an air cooling system or a liquid cooling system in particular an oil cooling or water cooling system.

12. An agricultural tractor according to one of the preceding claims, in which the controller (19) is a field-oriented, electronic controller.

13. An agricultural tractor according to one of the preceding claims, in which the electric motor (15) and/or the generator (12) comprise(s) superconductive elements.

14. An agricultural tractor according to one of the preceding claims, in which the power components of the controller comprise superconductive elements.

## Revendications

1. Véhicule, dont le moteur à combustion interne (1) est relié, de préférence solidairement en rotation, à l'arbre d'induit (13) d'un générateur (12), lequel générateur (12) alimente un moteur électrique (15), dont l'arbre d'induit (16) est relié au train moteur (9) par l'intermédiaire d'une transmission d'extrémité (7) qui possède de préférence un différentiel (8), et dans lequel l'unité à générateur/moteur électrique (12, 15) possède un régulateur électronique (19), caractérisé en ce que le véhicule est un tracteur agricole, qu'une valeur réelle pour le régulateur (19) est détectée par un capteur dans la position du rotor sur l'arbre d'induit (16) du moteur électrique (15), et que des valeurs de consigne pour la vitesse de rotation, le couple et le sens de rotation pour le régulateur peuvent être librement prédéterminées par l'opérateur.

2. Tracteur agricole selon la revendication 1, dans lequel le moteur à combustion interne (1) peut être relié par l'intermédiaire d'une autre transmission notamment une transmission démultiplicatrice, à un arbre de prise directe (10) du moteur et dans lequel l'arbre d'induit (16) du moteur électrique (15) est un arbre creux, à l'intérieur duquel est disposé un autre arbre d'entraînement (14), au moyen duquel l'arbre d'induit (13) du générateur (12) peut être relié à une autre transmission pour l'arbre de prise directe (10) du moteur.

3. Tracteur agricole selon la revendication 1, dans lequel le moteur à combustion interne (1) peut être relié par l'intermédiaire d'une autre transmission, notamment d'une transmission démultiplicatrice à un arbre de prise directe (10) du moteur et dans lequel le moteur électrique (15) est monté de telle sorte que son arbre d'induit est parallèle et/ou concentrique à l'essieu moteur du tracteur, l'entraînement de l'arbre de prise directe s'effectuant au niveau du moteur électrique.

4. Tracteur agricole selon la revendication 1, dans lequel le moteur à combustion interne (1) peut être relié par l'intermédiaire d'une autre transmission, notamment d'une transmission démultiplicatrice à un arbre de prise directe (10) du moteur et dans lequel le moteur à combustion interne (1) est disposé entre et de préférence en position centrée entre le générateur (12) et le moteur électrique (15) et dispose de deux dispositifs entraînés, dont l'un est relié solidairement en rotation au générateur et dont l'autre est relié solidairement en rotation à un arbre d'entraînement (14), qui entraîne la transmission pour l'arbre de prise directe (10) du moteur.

5. Tracteur agricole selon l'une des revendications précédentes, dans lequel l'arbre d'induit (16) du moteur électrique (15) de l'unité à générateur/moteur (12, 15) est couplé à la transmission d'extrémité (7) par l'intermédiaire d'une transmission étagée à échelons de marche (17).

6. Tracteur agricole selon l'une des revendications précédentes, dans lequel le moteur à combustion interne est relié au générateur (12) par l'intermédiaire d'un embrayage rigide en torsion avec un amortissement de torsion.

7. Tracteur agricole selon l'une des revendications précédentes, dans lequel le générateur (12) et le moteur à combustion interne (1) agencé en tant que moteur diesel sont accordés l'un sur l'autre en ce qui concerne la vitesse de rotation nominale et la puissance nominale.

8. Tracteur agricole selon l'une des revendications précédentes, dans lequel le moteur électrique est un moteur triphasé asynchrone comportant un rotor à cage d'écureuil.

9. Tracteur agricole selon l'une des revendications précédentes, dans lequel le régulateur (19) peut être relié en outre au moteur à combustion interne (1), notamment à son système d'alimentation en carburant et/ou à l'arbre de prise directe (10) du moteur et/ou au vérin hydraulique du tracteur.

10. Tracteur agricole selon l'une des revendications précédentes, dans lequel le régulateur (19) comporte un redresseur (20), un convertisseur statique triphasé (21) et un micro-ordinateur (23) commandant le convertisseur statique triphasé et qui reçoit son signal d'entrée de la part du transmetteur de valeur réelle de la position (22) du rotor.

11. Tracteur agricole selon l'une des revendications précédentes, dans lequel le refroidissement (18) de l'unité à générateur/moteur (12, 15) est un refroidissement par air ou un refroidissement par liquide, notamment refroidissement par huile ou un refroidissement par eau.

12. Tracteur agricole selon l'une des revendications précédentes, dans lequel le régulateur (19) est un régulateur électronique orienté sur le champ.

13. Tracteur agricole selon l'une des revendications précédentes, dans lequel le moteur électrique (15) et/ou le générateur (12) est/sont équipés d'éléments supraconducteurs.

14. Tracteur agricole selon l'une des revendications précédentes, dans lequel les composants de puissance du régulateur comportent des éléments supraconducteurs.
